# FASCICULE DE BREVET EUROPEEN

(11) **EP 2 847 060 B1**
(45) Date de publication et mention de la délivrance du brevet: **19.08.2020**
(21) Numéro de dépôt: 13714985.2
(22) Date de dépôt: 27.02.2013
(51) Int. Cl.: F25J 3/04

(54) **PROCÉDÉ DE SÉPARATION D'AIR PAR DISTILLATION CRYOGÉNIQUE**
VERFAHREN ZUR LUFTTRENNUNG DURCH KRYOGENE DESTILLATION
METHOD FOR AIR SEPARATION BY CRYOGENIC DISTILLATION

(30) Priorité: 11.05.2012 FR 1254340
(43) Date de publication de la demande: 18.03.2015
(73) Titulaire: L'Air Liquide Société Anonyme pour l'Etude et l'Exploitation des Procédés Georges Claude, 75007 Paris (FR)
(72) Inventeur: DAVIDIAN, Benoit, F-94100 Saint Maur Des Fosses (FR); DUBETTIER-GRENIER, Richard, F-94210 La Varenne Saint Hilaire (FR); GUILLARD, Alain, F-75016 Paris (FR); JOLY, Loic, F-75018 Paris (FR); LE BOT, Patrick, F-94300 Vincennes (FR); PECHOVA, Petra, F-94500 Champigny (FR)
(74) Mandataire: Mercey, Fiona Susan
(86) Numéro de dépôt international: PCT/FR2013/050396
(87) Numéro de publication internationale: WO 2013/167817

(56) Documents cités:
- FR-A1- 2 930 329
- JP-A- 51 141 782
- JP-A- 54 020 986
- US-A- 3 339 370
- US-A- 4 211 544
- US-A1- 2010 242 538

## Description

La présente invention est relative à un procédé de séparation d'air par distillation cryogénique. L'invention décrite propose en particulier une solution pour optimiser l'efficacité d'une unité de séparation d'air produisant de l'oxygène à haute pureté (supérieure à 97% O₂). Tous les pourcentages relatifs à des puretés dans ce document sont des pourcentages molaires.

Elle propose, afin de maximiser l'efficacité du cycle, de comprimer à froid (c'est-à-dire de le comprimer dans un compresseur ayant une température d'entrée d'au plus -150°C) le débit d'azote s'échappant du haut d'une première colonne, dite la colonne moyenne pression (MP) et envoyé vers le vaporiseur-condenseur principal du système de distillation, couplant thermiquement le haut de la colonne moyenne pression (MP) et la cuve d'une deuxième colonne, dite la colonne basse pression (BP). Cette compression froide permet de réduire la pression au refoulement du compresseur d'air principal. L'azote peut être comprimé sans avoir été réchauffé dans la ligne d'échange ou sinon il peut être partiellement réchauffé dans la ligne d'échange avant d'être comprimé dans la ligne d'échange principale, puis éventuellement refroidi de nouveau avant d'être envoyé au vaporiseur-condenseur.

L'application prévue est l'installation d'une ou plusieurs unités de séparation d'air produisant de l'oxygène pur.

Il est connu d'utiliser un compresseur froid pour chauffer de l'azote destiné à un vaporiseur-condenseur de cuve d'une colonne basse pression de séparation d'air. Or dans l'art antérieur, une autre partie de l'azote provenant de la colonne moyenne pression est utilisée pour vaporiser le liquide enrichi en oxygène provenant de la colonne moyenne pression ou sinon pour chauffer un vaporiseur intermédiaire de la colonne basse pression.

Les procédés pour clients consommant de l'oxygène peuvent exiger sur certains types d'applications une pureté élevée (typiquement de l'ordre de 99,5%) à basse ou haute pression.

Pour réduire la consommation électrique de l'unité, on peut chercher à réduire au minimum la pression au refoulement du compresseur principal, qui correspond, sur les schémas classiques et aux pertes de charge près, à la pression de la colonne moyenne pression (MP).

Pour ce faire, on considère un schéma à double colonne classique (avec éventuellement une colonne argon), produisant de l'oxygène à une pureté > 97% (c'est-à-dire ne contenant que de l'oxygène et de l'argon, et plus du tout d'azote), dans lequel le froid nécessaire à la tenue en froid de l'appareil est assuré par détente d'air ou d'azote dans une turbine cryogénique. Usuellement, pour une telle pureté d'oxygène l'échange thermique entre la colonne MP et la colonne basse pression (BP) est assuré par un seul vaporiseur-condenseur, le vaporiseur-condenseur principal de l'unité.

On considère alors l'installation d'un compresseur froid, comprimant la totalité du débit d'azote soutiré en tête de colonne MP qui est requis pour faire fonctionner le vaporiseur-condenseur principal de l'unité. Le rôle de ce compresseur froid est donc de décorréler la pression de la colonne MP de la pression de l'azote dans le vaporiseur-condenseur, ce qui permet d'abaisser la pression de la colonne MP au dessous de la pression requise pour réaliser l'échange thermique entre azote et oxygène dans le vaporiseur condenseur. La pression du compresseur d'air principal est donc réduite.

Cette optimisation n'est réalisable qu'à partir du moment où les turbines produisent suffisamment de froid pour que l'utilisation du compresseur cryogénique n'empêche pas le maintien en froid de l'appareil. En particulier, la production de liquides cryogéniques (oxygène, azote, argon liquide) « consomme » le froid disponible et réduit donc l'effet du compresseur cryogénique.

A noter également que ce dispositif peut être appliqué sur des sites existants où les compresseurs d'air (et d'oxygène le cas échéant) existants sont réutilisés et où seule la boite froide est remplacée. Cette optimisation permet de réduire fortement la pression opératoire des compresseurs d'air, dans la mesure où les courbes de performance de la machine le permettent.

Une double colonne classique ne permet pas d'abaisser la pression du compresseur principal en décorrélant la pression du vaporiseur-condenseur principal de la pression du compresseur principal.

Dans d'autres schémas, le compresseur froid traite l'azote destiné au vaporiseur-condenseur supérieur, qui vaporise un liquide très riche (environ 70% O₂) à un niveau intermédiaire dans la colonne BP. La vaporisation en cuve de colonne BP est assurée par un deuxième vaporiseur-condenseur, fonctionnant avec de l'air liquide. La production principale d'oxygène n'est pas soutirée au niveau du vaporiseur alimenté par le compresseur cryogénique. En outre, ce schéma n'est utile que pour la production d'oxygène à une pureté inférieure à 97%.

JP-A-54020986 décrit un procédé selon le préambule de la revendication 1. Ici tout l'azote détendu dans la turbine a été comprimé dans le compresseur froid. Or la consommation d'énergie de ce procédé est supérieure de 3% à celle de la présente invention et le procédé de l'art antérieur implique également d'utiliser des compresseurs plus gros.

Selon un objet de l'invention, il est prévu un procédé selon la revendication 1.

Selon d'autres objets facultatifs :
- le fluide riche en oxygène contient au moins 97% d'oxygène, voire au moins 99% d'oxygène.
- le fluide riche en oxygène de l'étape v) est un liquide qui se vaporise et se réchauffe dans la ligne d'échange.
- le liquide vaporisé est comprimé après réchauffage dans la ligne d'échange.
- le liquide enrichi en azote envoyé de la première colonne vers la deuxième colonne est moins riche en azote que le gaz enrichi en azote envoyé au vaporiseur-condenseur.
- tout le gaz condensé dans le vaporiseur-condenseur est renvoyé comme reflux à la première colonne.
- le fluide riche en oxygène de l'étape v) est un gaz riche en oxygène.
- le gaz riche en oxygène est comprimé après réchauffage dans la ligne d'échange à sa pression de production.
- on soutire de la deuxième colonne un gaz enrichi en argon et on l'envoie à une troisième colonne pour produire un débit plus riche en argon que le gaz enrichi en argon et on soutirer un gaz riche en azote de la première colonne comme produit.
- le compresseur est entraîné par un moteur et/ou par une turbine détendant de l'air ou un débit enrichi en azote provenant du système de colonnes.
- le premier mode d'opération est utilisé uniquement si le prix de l'électricité est en dessous d'un seuil et le deuxième mode d'opération est utilisé uniquement si le prix de l'électricité est au-dessus du seuil.

L'invention sera décrite en plus de détail en se référant aux figures qui représentent des procédés selon l'invention.

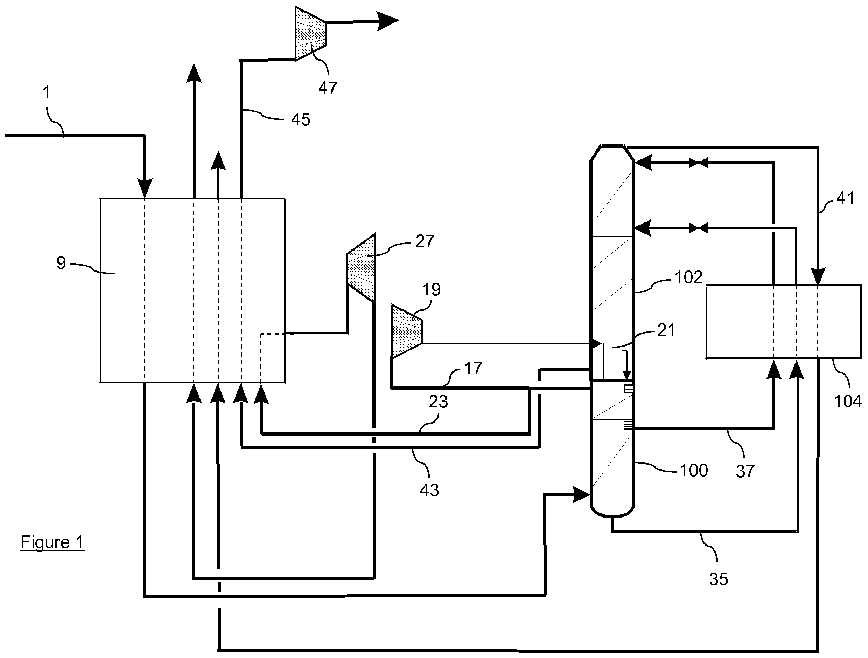

Dans la Figure 1, le système de colonnes comprend uniquement une double colonne avec une première colonne 100 et une deuxième colonne 102 opérant à une pression plus basse que celle de la première colonne. Les colonnes sont intégrés entre elles uniquement par un condenseur de cuve 21 de la deuxième colonne, chauffé par de l'azote de tête 17 de la première colonne 100 après compression dans un compresseur froid 19.

Un débit d'air 1 à la pression de la première colonne alimente la première colonne après refroidissement dans un échangeur de chaleur 9.

Un liquide enrichi en oxygène 35 est envoyé de la cuve de la première colonne à la deuxième colonne après refroidissement dans un sous-refroidisseur 104. Un liquide 37 enrichi en azote est envoyé de la première colonne à la tête de la deuxième colonne 102. Un gaz riche en azote 41 se réchauffe dans le sous-refroidisseur 104 et ensuite dans l'échangeur 9.

Un liquide 43 riche en oxygène contenant au moins 97% d'oxygène est soutiré de la cuve de la deuxième colonne 102, vaporisé dans l'échangeur 9 à la pression de la deuxième colonne (gaz 45) puis comprimé dans un compresseur 47.

Une partie 17 de l'azote soutiré de la tête de la première colonne 100 est comprimée dans un compresseur 19 sans avoir été réchauffée puis se condense dans le vaporiseur-condenseur de cuve 21.

Le reste 23 de l'azote se réchauffe dans l'échangeur 9 jusqu'à une température intermédiaire de celui-ci, est détendu dans une turbine 27, se réchauffe à partir du bout froid de l'échangeur jusqu'au bout chaud pour former un gaz riche en azote.

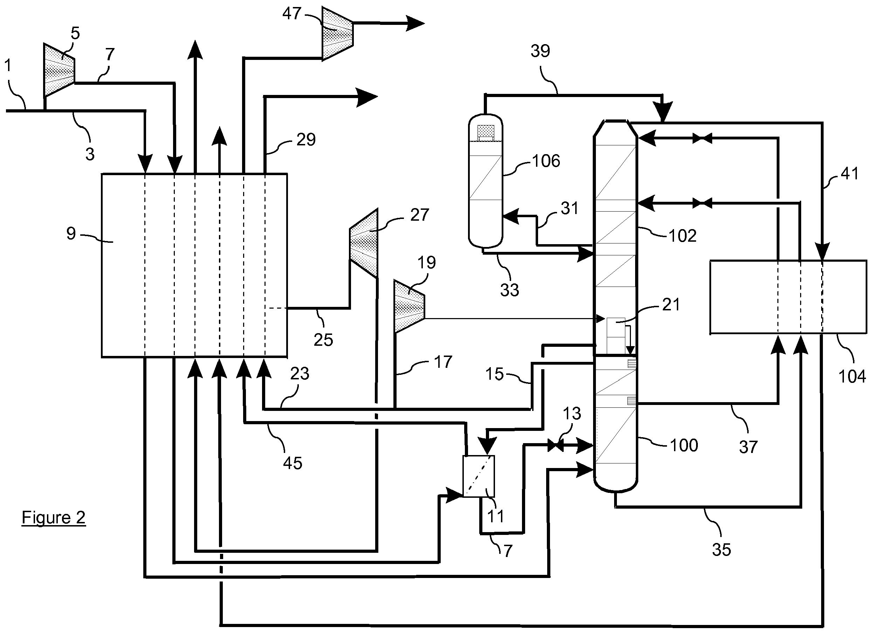

A la différence de la Figure 1, la Figure 2 comprend une colonne argon 106 qui sert à séparer de l'argon présent de la deuxième colonne et ainsi améliorer la pureté de l'oxygène ou permettre de soutirer d'avantage d'azote de la tête de la colonne moyenne pression, ce qui permet de maximiser le froid disponible pour le compresseur froid. La colonne 106 est alimentée par un débit 31 enrichi en argon et produit un débit liquide 33 qui est renvoyé à la deuxième colonne. La colonne argon a un condenseur de tête refroidi de manière classique par une partie du liquide 35 (non-illustrée). Le gaz enrichi en argon 39 est mélangé avec le gaz riche en azote 41 pour former un résiduaire.

Deux débits d'air sont envoyés à l'échangeur 9, le débit 1 étant divisé en un débit 3 et un débit 7. Le débit 3 est à la pression de la première colonne et rentre sous forme gazeuse dans cette colonne. Le débit 7 est surpressé dans un surpresseur 5 à une pression plus élevée, se refroidit dans l'échangeur et ensuite se condense dans un vaporiseur 11 où se vaporise l'oxygène liquide pour former de l'oxygène gazeux 45.

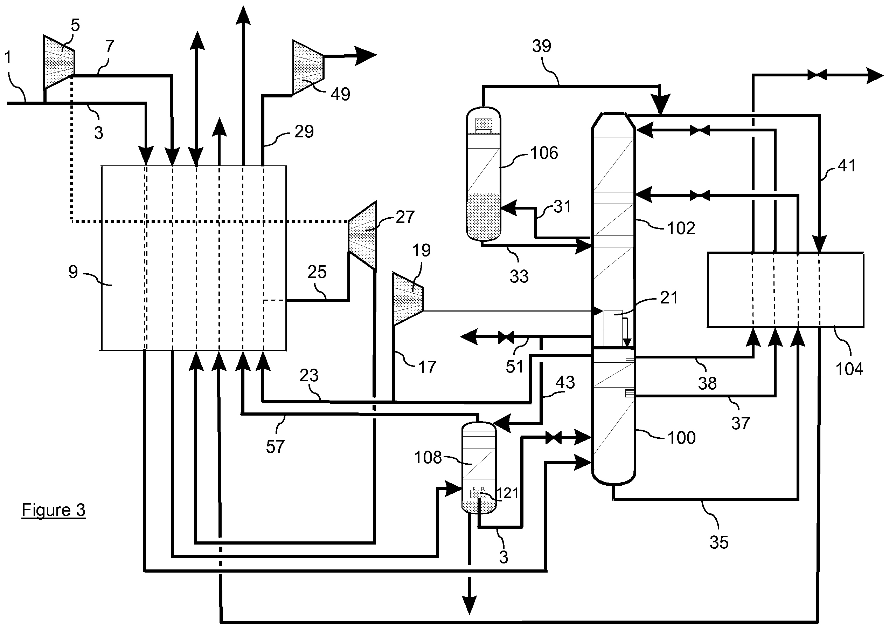

La Figure 3 diffère de la Figure 2 en ce que l'oxygène gazeux n'est pas comprimé en aval de l'échangeur 9. Une partie 51 de l'oxygène liquide sert de produit liquide et le reste 43 est envoyé en tête d'une colonne auxiliaire 108 ayant un rebouilleur de cuve 121 mais sans condenseur de tête. L'air 7 sert à chauffer le rebouilleur de cuve 121 de la colonne auxiliaire 108. L'oxygène gazeux 57 devant servir de produit est soutiré en tête de la colonne auxiliaire 108 et sert de produit gazeux 57. Le liquide de cuve est enrichi en krypton-xénon et peut servir à produire ces gaz.

Le procédé des trois figures opère avec deux modes d'opération. Selon le premier mode d'opération, le compresseur 19 est à l'arrêt et la pression de l'air 1 est augmentée de sorte que le rebouilleur 21 reçoit de l'azote à la pression de la colonne 100 et on soutire au moins un liquide du système de colonnes comme produit final (par exemple de l'oxygène liquide 51 et/ou de l'azote liquide 38). Pendant le deuxième mode d'opération, la colonne 100 opère à une pression plus basse que pendant le premier mode d'opération. Le compresseur 19 fonctionne et on ne soutire pas de liquide du système de colonnes comme produit final ou on soutire au moins trois fois moins de liquide du système de colonne que pendant le premier mode d'opération. Ainsi l'azote utilisé pour chauffer le rebouilleur 21 est à la même pression dans les deux modes d'opération.

## Revendications

1. Procédé de séparation d'air par distillation cryogénique dans un système de colonnes comprenant au moins une première colonne (100) opérant à une première pression et une deuxième colonne (102) opérant à une deuxième pression inférieure à la première pression, la tête de la première colonne étant thermiquement reliée à la cuve de la deuxième colonne par un vaporiseur-condenseur (21) dans lequel :
i) de l'air épuré est refroidi dans une ligne d'échange (9) et est envoyé à la première colonne pour y être séparé,
ii) un gaz enrichi en azote est soutiré de la tête de la première colonne et divisé en deux parties, une première partie (17) est comprimée dans un compresseur (19) ayant une température d'entrée d'au plus -150°C et se condense dans le vaporiseur-condenseur,
iii) une deuxième partie (23) du gaz enrichi en azote est réchauffée dans la ligne d'échange (9) et détendue dans une turbine de détente (27).
iv) un liquide enrichi en oxygène (35) ou un liquide dérivé de ce liquide est envoyé de la cuve de la première colonne à la deuxième colonne pour y être séparé, sans avoir été réchauffé contre un gaz enrichi en azote de la première colonne.
v) un liquide enrichi en azote (38) est envoyé de la tête de la première colonne à la tête de la deuxième colonne,
vi) un fluide riche en oxygène (43) est soutiré de la cuve de la deuxième colonne et se réchauffe dans la ligne d'échange,
vii) un gaz riche en azote (41) est soutiré de la partie supérieure de la deuxième colonne et se réchauffe dans la ligne d'échange,
viii) le vaporiseur-condenseur étant le seul moyen de vaporisation de liquide dans la partie inférieure de la deuxième colonne,
**caractérisé en ce que** la deuxième partie du gaz enrichi en azote se réchauffe dans la ligne d'échange et est détendue dans la turbine, sans avoir été comprimée et **en ce que** pendant un premier mode d'opération, le compresseur est à l'arrêt et on soutire au moins un liquide (38, 51) du système de colonnes comme produit final et pendant un deuxième mode d'opération, le compresseur fonctionne et on ne soutire pas de liquide du système de colonnes comme produit final ou on soutire au moins trois fois moins de liquide du système de colonne que pendant le premier mode d'opération.

2. Procédé selon la revendication 1 dans lequel le fluide riche en oxygène (43) contient au moins 97% d'oxygène, voire au moins 99% d'oxygène.

3. Procédé selon l'une des revendications précédentes dans lequel le liquide enrichi en azote envoyé de la première colonne (100) vers la deuxième colonne (102) est moins riche en azote que le gaz enrichi en azote envoyé au vaporiseur-condenseur.

4. Procédé selon l'une des revendications précédentes dans lequel tout le gaz condensé dans le vaporiseur-condenseur (21) est renvoyé comme reflux à la première colonne (100).

5. Procédé selon l'une des revendications précédentes dans lequel le fluide riche en oxygène (43) de l'étape v) est un gaz riche en oxygène.

6. Procédé selon la revendication 5 dans lequel le gaz riche en oxygène (43) est comprimé après réchauffage dans la ligne d'échange à sa pression de production.

7. Procédé selon l'une des revendications précédentes dans lequel on soutire de la deuxième colonne (102) un gaz enrichi en argon et on l'envoie à une troisième colonne (106) pour produire un débit plus riche en argon que le gaz enrichi en argon et on soutire un gaz riche en azote de la première colonne comme produit.

8. Procédé selon l'une des revendications précédentes dans lequel le compresseur (19) est entraîné par un moteur et/ou par une turbine (27) détendant de l'air ou un débit enrichi en azote provenant du système de colonnes.

9. Procédé selon la revendication 1 dans lequel le premier mode d'opération est utilisé uniquement si le prix de l'électricité est en dessous d'un seuil et le deuxième mode d'opération est utilisé uniquement si le prix de l'électricité est au-dessus du seuil.

10. Procédé selon la revendication 1 dans lequel la première colonne (100) opère à une pression plus élevée pendant le premier mode que pendant le deuxième mode, de sorte que pendant le premier et le deuxième modes, le vaporiseur-condenseur reçoit le gaz enrichi en azote à la pression à laquelle opère la première colonne pendant le premier mode.

## Patentansprüche

1. Verfahren zur Luftabscheidung durch kryogene Destillation in einem Kolonnensystem, umfassend mindestens eine erste Kolonne (100), die mit einem ersten Druck arbeitet, und eine zweite Kolonne (102), die mit einem zweiten Druck arbeitet, der geringer ist als der erste Druck, wobei der Kopf der ersten Kolonne mit dem Sumpf der zweiten Kolonne durch einen Verdampfer-Kondensator (21) thermisch verbunden ist, wobei:
i) gereinigte Luft in einer Austauschleitung (9) gekühlt wird und zu der ersten Kolonne befördert wird, um dort abgeschieden zu werden,
ii) ein stickstoffangereichertes Gas von dem Kopf der ersten Kolonne entnommen wird und auf zwei Teile aufgeteilt wird, ein erster Teil (17) in einem Kompressor (19), der eine Eingangstemperatur von höchstens -150°C aufweist, komprimiert wird und in dem Verdampfer-Kondensator kondensiert,
iii) ein zweiter Teil (23) des stickstoffangereicherten Gases in der Austauschleitung (9) erhitzt und in einer Expansionsturbine (27) expandiert wird,
iv) eine sauerstoffangereicherte Flüssigkeit (35) oder eine von dieser Flüssigkeit abgeleitete Flüssigkeit von dem Sumpf der ersten Kolonne in die zweite Kolonne befördert wird, um dort abgeschieden zu werden, ohne gegenüber einem stickstoffangereicherten Gas der ersten Kolonne erhitzt worden zu sein,
v) eine stickstoffangereicherte Flüssigkeit (38) von dem Kopf der ersten Kolonne zu dem Kopf der zweiten Kolonne befördert wird,
vi) ein sauerstoffreiches Fluid (43) von dem Sumpf der zweiten Kolonne entnommen wird und in der Austauschleitung erhitzt wird,
vii) ein stickstoffreiches Gas (41) von dem oberen Teil der zweiten Kolonne entnommen wird und in der Austauschleitung erhitzt wird,
viii) der Verdampfer-Kondensator das einzige Mittel zur Verdampfung von Flüssigkeit in dem unteren Teil der zweiten Kolonne ist,
**dadurch gekennzeichnet, dass** der zweite Teil des stickstoffangereicherten Gases in der Austauschleitung erhitzt wird und in der Turbine ewpandiert wird, ohne komprimiert worden zu sein, und dadurch, dass während eines ersten Betriebsmodus der Kompressor ausgeschaltet ist und mindestens eine Flüssigkeit (38, 51) von dem Kolonnensystem als Endprodukt entnommen wird und während eines zweiten Betriebsmodus der Kompressor läuft und keine Flüssigkeit von dem Kolonnensystem als Endprodukt entnommen wird oder mindestens dreimal weniger Flüssigkeit von dem Kolonnensystem entnommen wird als während des ersten Betriebsmodus.

2. Verfahren nach Anspruch 1, wobei das sauerstoffreiche Fluid (43) mindestens 97% Sauerstoff oder sogar mindestens 99 % Sauerstoff enthält.

3. Verfahren nach einem der vorstehenden Ansprüche, wobei die stickstoffangereicherte Flüssigkeit, die von der ersten Kolonne (100) zu der zweiten Kolonne (102) befördert wird, weniger stickstoffreich ist als das stickstoffangereicherte Gas, das zu dem Verdampfer-Kondensator befördert wird.

4. Verfahren nach einem der vorstehenden Ansprüche, wobei das gesamte in dem Verdampfer-Kondensator (21) kondensierte Gas als Rücklauf zu der ersten Kolonne (100) zurückbefördert wird.

5. Verfahren nach einem der vorstehenden Ansprüche, wobei das sauerstoffreiche Fluid (43) aus Schritt v) ein sauerstoffreiches Gas ist.

6. Verfahren nach Anspruch 5, wobei das sauerstoffreiche Gas (43) nach dem Erhitzen in der Austauschleitung auf seinen Produktionsdruck komprimiert wird.

7. Verfahren nach einem der vorstehenden Ansprüche, wobei von der zweiten Kolonne (102) ein argonangereichertes Gas entnommen wird und es zu einer dritten Kolonne (106) befördert wird, um einen argonreicheren Volumenstrom zu erzeugen als das argonangereicherte Gas, und ein stickstoffreiches Gas von der ersten Kolonne als Produkt entnommen wird.

8. Verfahren nach einem der vorstehenden Ansprüche, wobei der Kompressor (19) von einem Motor und/oder von einer Turbine (27) angetrieben wird, die Luft oder einen stickstoffangereicherten Volumenstrom aus dem Kolonnensystem expandiert.

9. Verfahren nach Anspruch 1, wobei der erste Betriebsmodus nur verwendet wird, wenn der Strompreis unter einem Grenzwert liegt, und der zweite Betriebsmodus nur verwendet wird, wenn der Strompreis über dem Grenzwert liegt.

10. Verfahren nach Anspruch 1, wobei die erste Kolonne (100) während des ersten Modus mit einem höheren Druck arbeitet als während des zweiten Modus, sodass während des ersten und des zweiten Modus der Verdampfer-Kondensator das stickstoffangereicherte Gas mit dem Druck empfängt, mit dem die erste Kolonne während des ersten Modus arbeitet.

## Claims

1. Method for separating air by cryogenic distillation in a system of columns comprising at least one first column (100) operating at a first pressure and a second column (102) operating at a second pressure lower than the first pressure, the head of the first column being thermally connected to the second column tank by a vaporiser-condenser (21) in which:
i) refined air is cooled in the exchange line (9) and is sent to the first column to be separated,
ii) a nitrogen-enriched gas is extracted from the head of the first column and divided into two parts, a first part (17) is compressed in a compressor (19) having an inlet temperature of no more than -150°C and condenses in a vaporiser-condenser,
iii) a second part (23) of the nitrogen-enriched gas is heated in the exchange line (9) and expanded in an expansion turbine (27).
iv) an oxygen-enriched liquid (35) or a liquid derived from this liquid is sent from the first column tank to the second column to be separated, without having been heated against a nitrogen-enriched gas from the first column.
v) a nitrogen-enriched liquid (38) is sent from the head of the first column to the head of the second column,
vi) an oxygen-rich fluid (43) is extracted from the second column tank and is heated in the exchange line,
vii) a nitrogen-enriched gas (41) is extracted from the upper part of the second column and heats up in the exchange line,
viii) the vaporiser-condenser being the only means of liquid vaporisation in the lower part of the second column,
**characterized in that** the second part of the nitrogen-enriched gas is heated in the exchange line and is expanded in the turbine, without having been compressed and **in that** during a first mode of operation, the compressor is stopped and at least one liquid (38, 51) is extracted as a final product from the system of columns, and during a second mode of operation, the compressor functions and no liquid is extracted as a final product from the system of columns, or at least three times less liquid is extracted from the system of columns than during the first mode of operation.

2. Method according to claim 1 in which the oxygen-rich fluid (43) contains at least 97% oxygen, or at least 99% oxygen.

3. Method according to one of the preceding claims in which the nitrogen-enriched liquid sent from the first column (100) to the second column (102) is less rich in nitrogen than the nitrogen-enriched gas sent to the vaporiser-condenser.

4. Method according to one of the preceding claims in which all the gas condensed in the vaporiser-condenser (21) is returned as reflux to the first column (100).

5. Method according to one of the preceding claims in which the oxygen-rich fluid (43) of step v) is an oxygen-rich gas.

6. Method according to claim 5 in which the oxygen-rich gas (43) is compressed to the production pressure thereof after heating in the exchange line.

7. Method according to one of the preceding claims in which an argon-enriched gas is extracted from the second column (102) and is sent to a third column (106) in order to produce a higher argon-rich flow than the argon-enriched gas, and a nitrogen-enriched gas is extracted as a product from the first column.

8. Method according to one of the preceding claims in which the compressor (19) is driven by an air-expanding motor and/or by a turbine (27) or a nitrogen-enriched flow originating from the system of columns.

9. Method according to claim 1 in which the first mode of operation is used only if the price of electricity is below a threshold and the second mode of operation is used only if the price of electricity is above the threshold.

10. Method according to claim 1 in which the first column (100) operates at a higher pressure during the first mode than during the second mode, in such a way that during the first and the second modes, the vaporiser-condenser receives nitrogen-enriched gas at the pressure at which the first column operates during the first mode.
